# FASCICULE DE BREVET EUROPEEN

(11) **EP 3 774 972 B1**
(45) Date de publication et mention de la délivrance du brevet: **28.02.2024**
(21) Numéro de dépôt: 19719577.9
(22) Date de dépôt: 03.04.2019
(51) Int. Cl.: C08G 18/48, C08G 18/66, C08G 18/72, C08G 18/76, C08G 18/78, C08G 18/16, C08G 18/18, C08G 18/22, C08G 18/32, C08G 18/42, C08G 18/12, C08K 3/26, C08K 3/36

(54) **COMPOSITION A BASE DE POLYURETHANE**
POLYURETHANBASIERTE ZUSAMMENSETZUNG
POLYURETHANE-BASED COMPOSITION

(30) Priorité: 04.04.2018 FR 1852924
(43) Date de publication de la demande: 17.02.2021
(73) Titulaire: Bostik SA, 92700 Colombes (FR)
(72) Inventeur: MULLER-SELLAK, Saïda, 60280 VENETTE (FR); BRUNEL, Adeline, 60280 VENETTE (FR)
(74) Mandataire: Arkema Patent
(86) Numéro de dépôt international: PCT/FR2019/050768
(87) Numéro de publication internationale: WO 2019/193279

(56) Documents cités:
- WO-A1-2017/109382
- WO-A1-2018/011491
- JP-A- H 101 607

## Description

### DOMAINE DE L'INVENTION

La présente invention concerne une composition à base de polyuréthane.

L'invention concerne également l'utilisation de ladite composition pour la réparation et/ou le collage de matériaux dans le domaine de l'automobile, de la marine et/ou de la construction.

### ARRIERE-PLAN TECHNOLOGIQUE

Les compositions adhésives bicomposantes à base de polyuréthane sont couramment utilisées pour obtenir des performances mécaniques élevées. Ces compositions peuvent être sous la forme de deux compositions (ou composants) :
- l'un (appelé composant -NCO) contenant les entités chimiques porteuses de groupements terminaux isocyanates ; et
- l'autre (appelé composant -OH) contenant les entités chimiques porteuses de groupements terminaux hydroxyles.

Toutefois, ces compositions adhésives à base de polyuréthane présentent en général l'inconvénient de mettre en oeuvre un composant -NCO comprenant des teneurs résiduelles importantes en monomères diisocyanates provenant de la réaction de synthèse du prépolymère de polyuréthane porteur de groupements NCO (ou à terminaisons NCO). Ces monomères diisocyanates résiduels sont en effet susceptibles de conduire à un certain nombre d'effets indésirables. On entend par « monomère diisocyanate », un composé hydrocarboné de faible masse molaire (inférieure à 300 g/mol) possédant deux groupes isocyanate. En particulier, on entend par « monomère diisocyanate aromatique », un monomère diisocyanate tel que défini précédemment, dans lequel l'un des groupes NCO est relié par une liaison covalente à un atome de carbone faisant parti d'un cycle hydrocarboné aromatique tel qu'un groupe phényle. En particulier, on entend par « monomère diisocyanate aliphatique », un monomère diisocyanate non aromatique ou un monomère diisocyanate dans lequel aucun des groupes NCO n'est relié par une liaison covalente à un atome de carbone faisant parti d'un cycle hydrocarboné aromatique tel qu'un groupe phényle.

La présence de teneurs en monomères résiduels élevées est dangereuse pour la manipulation et la santé des utilisateurs, ce qui implique des restrictions d'usage et la mise en oeuvre de systèmes de ventilation. La mise en place de ces systèmes n'est pas toujours possible, par exemple dans le cadre du collage ou réparation de pièces automobiles (garagistes), ou bien dans la construction. De plus, afin de tenir compte des effets indésirables liés à la présence de ces monomères diisocyanates, la règlementation impose pour certains types de produits un étiquetage particulier du produit, dès lors que la concentration en monomères diisocyanates aromatiques dépasse 0,1% en poids du poids du produit et/ou dès lors que la concentration en monomères diisocyanates aliphatiques dépasse 0,5% en poids, voire de préférence 0,1% en poids du poids du produit.

WO2018/011491 décrit une composition adhésive bicomposante à base de polyuréthane comprenant une teneur réduite en monomère isocyanate résiduel, pour utilisation dans les emballages flexibles alimentaires. WO2017/109382 décrit des compositions monocomposantes à faible viscosité à base de polyuréthanes. JP H10 1607 décrit des compositions multi-composante et thixotropique à base de polyuréthanes.

Il est donc souhaitable de mettre à disposition du public des compositions adhésives bicomposantes dans lequel le composant -NCO, à base de polyuréthane à terminaisons NCO, est substantiellement voire totalement exempte de monomères diisocyanates résiduels, et de préférence dans lequel la teneur en monomères diisocyanates résiduels est inférieure ou égale aux seuils réglementaires susmentionnés.

Des compositions adhésives présentant des taux de monomères résiduels faibles sont connues dans ce domaine. Toutefois, ces compositions présentent au moins l'un des inconvénients suivants : viscosité élevée, difficulté d'extrusion, faible réactivité, performances mécaniques limitées, fluage après application, ...

Il existe donc un besoin de fournir de nouvelles compositions à base de polyuréthane ne présentant pas au moins l'un des inconvénients susmentionnés.

### DESCRIPTION DE L'INVENTION

Dans la présente demande, en l'absence d'indication contraire :
- les quantités exprimées sous la forme de pourcentage correspondent à des pourcentages poids/poids ;
- les masses moléculaires moyennes en nombre (Mn), exprimées en gramme par mole (g/mol) sont déterminées par calcul à l'aide de la fonctionnalité (nombre de groupe NCO ou OH par mole) de l'entité considérée (polymère de polyuréthane à terminaisons NCO, diol ou polyol) et de l'analyse de la teneur en groupes terminaux (NCO ou OH) exprimée en %NCO, en mg KOH/g ou en milliéquivalent par gramme (méq/g) selon la nature de l'entité considérée ;
- l'indice hydroxyle d'un polyol (noté IOH) représente le nombre de fonctions hydroxyles par gramme de polyol et est exprimé dans le texte de la présente demande sous la forme du nombre équivalent de milligrammes de potasse (mg KOH/g) utilisés dans le dosage des fonctions hydroxyles. L'IOH peut être mesuré expérimentalement par exemple selon la norme ISO 14900 :2001. Dans le cas d'un mélange de polyols, l'IOH peut également être calculé à partir des IOH connus de chacun des polyols et de leur teneur pondérale respective dans ledit mélange ;
- par « monomère diisocyanate dissymétrique », on entend un monomère diisocyanate dont les groupes isocyanate possèdent des réactivités différentes au regard d'un diol ou d'un polyol donné. En règle générale, un tel monomère ne possède pas d'axe, plan ou centre de symétrie ;
- la teneur en monomère diisocyanate est mesurée selon la méthode d'analyse suivante reposant sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon d'adhésif par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 4 à 5, muni d'un détecteur Ultra-Violet (UV) fonctionnant à 254 nm. Ces composés sont identifiés et quantifiés en comparant leur temps de rétention et leur surface de pics chromatographiques avec ceux des dérivés PPZ étalons obtenus par réaction d'un monomère diisocyanate de nature et concentration connue ;
- la viscosité est mesurée à l'aide d'un viscosimètre Brookfield selon la norme ISO 2555 de 1999. De préférence, la mesure réalisée à 23°C peut se faire à l'aide d'un viscosimètre Brookfield RVT, d'une aiguille adaptée au domaine de viscosité et à une vitesse de rotation de 20 tours par minute (tr/mn)

### A. Composition

La présente invention concerne une composition comprenant :
- un composant -NCO comprenant :
   A) au moins un polyuréthane comportant au moins deux groupements terminaux NCO obtenu par réaction de polyaddition :
      - d'une composition comprenant au moins un diisocyanate, de préférence au moins un diisocyanate dissymétrique ; et
      - d'une composition comprenant au moins un polyol,
   B) au moins un polyisocyanate comprenant au moins trois fonctions isocyanate
      - NCO, choisi dans le groupe constitué des biurets, des isocyanurates, des adduits de diisocyanates et de triols, et de leurs mélanges ;
- un composant -OH comprenant :
   - au moins deux polyols P1 ayant chacun une masse moléculaire moyenne en nombre strictement inférieure à 500 g/mol, lesdits polyols P1 étant tels que :
      ∘ au moins un polyol P1 comprend au moins trois fonctions hydroxyle, de préférence au moins quatre fonctions hydroxyle ; et
      ∘ au moins un polyol P1 comprend au moins deux fonctions hydroxyle ; et
   - au moins un polyol P2 ayant une masse moléculaire moyenne en nombre strictement supérieure à 1 000 g/mol,
ladite composition comprenant au moins un agent de rhéologie,
le ratio volumique composant -OH/composant -NCO allant de 1/3 à 3/1.

Les polyisocyanate comprenant au moins trois fonctions isocyanate B) peuvent être choisis parmi les polyisocyanates monomériques, les polyisocyanates oligomériques, les polyisocyanates polymériques, et leurs mélanges.

### Composant -OH

### Polyol P1

Le composant -OH comprend au moins deux polyols P1 ayant chacun une masse moléculaire moyenne en nombre strictement inférieure à 500 g/mol.

Selon un mode de réalisation, les polyols P1 sont choisis parmi les polyester polyols, les polyéther polyols, les polyène polyols, les polycarbonate polyols, les poly(éthercarbonate) polyols, et leurs mélanges. De préférence, les polyols P1 sont choisis parmi les polyéther polyols.

Parmi les polyéther polyols, on peut par exemple citer les polyoxypropylène (aussi désignés par polypropylène glycol (PPG), les polyoxyéthylène (aussi désignés par polyéthylène glycol (PEG)), et leurs mélanges, les polyéther polyols étant de préférence des polyoxypropylène.

Les polyéther polyols peuvent comprendre un ou plusieurs radicaux arylène, de préférence phénylène.

De préférence, le composant -OH comprend :
- au moins un polyol P1 comprenant au moins trois fonctions hydroxyle, de préférence au moins quatre fonctions hydroxyle ; et
- au moins un polyol P1 comprenant deux fonctions hydroxyle, de préférence comprenant au moins un radical arylène.

De façon encore plus préférée, le composant -OH comprend :
- au moins un polyol P1 comprenant au moins quatre fonctions hydroxyle ; et
- au moins un polyol P1 comprenant deux fonctions hydroxyle, de préférence comprenant au moins un radical arylène.

Selon un mode de réalisation, les polyols P1 ont chacun une masse moléculaire moyenne en nombre allant de 100 g/mol à moins de 500 g/mol, de préférence de 200 g/mol à moins de 500 g/mol, préférentiellement de 300 à moins de 500 g/mol, avantageusement de 400 à moins de 500 g/mol, et encore plus avantageusement de 400 à 490 g/mol.

De préférence, les polyols P1 ont chacun un indice hydroxyle (IOH) (moyen) allant de 224 à 2244 milligrammes de KOH par gramme de polyol (mg KOH/g), de préférence de 224 à 1122 mg KOH/g, préférentiellement de 224 à 748 mg KOH/g, encore plus préférentiellement de 229 à 561 mg KOH/g.

Parmi les polyols P1, on peut par exemple citer le DIANOL^{®} 330 (4,4'-isopropylidènediphénol propoxylé ayant un IOH d'environ 280 mg KOH/g) commercialisé par CECA, ou le LUPRANOL^{®} 3402 (éthylène diamine propoxylée ayant une fonctionnalité de 4 et un IOH d'environ 470 mg KOH/g) commercialisé par BASF.

Le composant -OH selon l'invention peut comprendre une teneur totale en polyol(s) P1 supérieure ou égale à 15% en poids, de préférence de 15% à 80% en poids, préférentiellement de 20% à 70% en poids, avantageusement de 25% à 60% en poids par rapport au poids du composant -OH.

### Polyol P2

Le composant -OH comprend au moins un polyol P2 ayant une masse moléculaire moyenne en nombre strictement supérieure à 1 000 g/mol, de préférence inférieure ou égale à 10 000 g/mol, préférentiellement inférieure ou égale à 5 000 g/mol, avantageusement inférieure ou égale à 3 000 g/mol.

De préférence, le polyol P2 est choisi parmi les diols, les triols ou leurs mélanges.

De préférence, le polyol P2 a un indice hydroxyle (IOH) (moyen) allant de 11 à 168 milligrammes de KOH par gramme de polyol (mg KOH/g), de préférence de 22 à 168 mg KOH/g, préférentiellement de 37 à 168 mg KOH/g.

Le(s) polyol(s) P2 utilisable(s) peu(ven)t être choisi(s) parmi les polyester polyols, les polyéther polyols, les polyène polyols, les polycarbonate polyols, les poly(éther-carbonate) polyols, et leurs mélanges.

Le(s) polyol(s) utilisable(s) peu(ven)t être choisi(s) parmi les polyols aromatiques, les polyols aliphatiques, les polyols arylaliphatiques et les mélanges de ces composés.

Les polyester polyols peuvent être choisis parmi les polyester diols et les polyester triols, et de préférence parmi les polyester diols.

Parmi les polyester polyols, on peut par exemple citer :
- les polyesters polyols d'origine naturelle tel que l'huile de ricin ;
- les polyesters polyols résultant de la polycondensation :
   - d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec
   - un ou plusieurs acide polycarboxylique ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone.
- les estolides polyols résultant de la polycondensation d'un ou plusieurs hydroxyacides, tel que l'acide ricinoléïque, sur un diol (on peut par exemple citer les « POLYCIN^{®} D-1000 » et « POLYCIN^{®} D-2000 » disponibles chez VERTELLUS).

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :
- le « TONE^{®} 0240 » (commercialisé par UNION CARBIDE) qui est une polycaprolactone de masse moléculaire moyenne en nombre d'environ 2 000 g/mol, et un point de fusion de 50°C environ,
- le « DYNACOLLO 7381 » (comercialisé par EVONIK) de masse moléculaire moyenne en nombre d'environ 3 500 g/mol, et ayant un point de fusion de 65°C environ,
- le « DYNACOLLO 7360 » (commercialisé par EVONIK) qui résulte de la condensation de l'acide adipique avec l'hexanediol, et a une masse moléculaire moyenne en nombre d'environ 3 500 g/mol, et un point de fusion de 55°C environ,
- le « DYNACOLL^{®} 7330 » (commercialisé par EVONIK) de masse moléculaire moyenne en nombre d'environ 3 500 g/mol, et ayant un point de fusion de 85°C environ,
- le « DYNACOLL^{®} 7363 » (commercialisé par EVONIK) qui résulte également de la condensation de l'acide adipique avec l'hexanediol, et a une masse moléculaire moyenne en nombre d'environ 5 500 g/mol, et un point de fusion de 57°C environ,
- le « DYNACOLL^{®} 7250 » (commercialisé par EVONIK) : polyester polyol ayant une viscosité de 180 Pa.s à 23°C, une masse moléculaire moyenne en nombre Mn égale à 5 500 g/mol, et une T_{g} égale à -50°C,
- le « KURARAY^{®} P-6010 » (commercialisé par KURARAY) : polyester polyol ayant une viscosité de 68 Pa.s à 23°C, une masse mdéculaire moyenne en nombre Mn égale à 6 000 g/mol, et une T_{g} égale à -64°C,
- le « KURARAY^{®} P-10010 » (commercialisé par KURARAY) : polyester polyol ayant une viscosité de 687 Pa.s à 23°C, et une masse moléculaire moyenne en nombre Mn égale à 10 000 g/mol,
- le « DEKATOL^{®} 3008 » (commercialisé par la société BOSTIK) de masse molaire moyenne en nombre Mn voisine de 1 060 g/mol et dont l'indice hydroxyle va de 102 à 112 mg KOH/g. Il s'agit d'un produit issu de la condensation d'acide adipique, de diéthylèneglycol et de monoéthylèneglycol.

Le(s) polyéther polyol(s) utilisable(s) selon l'invention est (sont) de préférence choisi(s) parmi les polyoxyalkylène polyols, dont la partie alkylène, linéaire ou ramifiée, comprend de 1 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse moléculaire moyenne en nombre (Mn) allant de plus de 1 000 g/mol à 12 000 g/mol ;
- les polyoxyéthylène diols ou triols (aussi désignés par polyéthylène glycol (PEG) diols ou triols) ayant une masse moléculaire moyenne en nombre (Mn) allant de pus de 1 000 g/mol à 12 000 g/mol;
- et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « VORANOL@ P 1010 » par la société DOW de masse moléculaire moyenne en nombre (Mn) voisine de 1 020 g/mol et dont l'indice hydroxyle est d'environ 110 mg KOH/g, ou le « VORANOL@ P2000 » commercialisé par la société DOW de masse moléculaire moyenne en nombre voisine de 2 040 g/mol et dont l'indice hydroxyle est d'environ 55 mg KOH/g.

Le(s) polyène polyol(s) utilisable(s) selon l'invention peu(ven)t être choisi(s) de préférence parmi les polyènes comportant des groupes hydroxyles terminaux, et leurs dérivés correspondants hydrogénés ou époxydés.

De préférence, le(s) polyène polyol(s) utilisable(s) selon l'invention est (sont) choisi(s) parmi les polybutadiènes comportant des groupes hydroxyles terminaux, éventuellement hydrogénés ou époxydés. Préférentiellement, le(s) polyène polyol(s) utilisable(s) selon l'invention est (sont) choisi(s) parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères de butadiène, saturé ou insaturé, comprenant des groupes hydroxyles terminaux, éventuellement époxydés, tels que par exemple ceux commercialisés sous la dénomination « POLY BD^{®} ou KRASOL^{®} » par la société CRAY VALLEY.

Les polycarbonate polyols peuvent être choisis parmi les polycarbonate diols ou triols. A titre d'exemple de polycarbonate diol, on peut citer :
- le « CONVERGE^{®} POLYOL 212-20 » commercialisés par la société NOVOMER de masse moléculaire en nombre (Mₙ) égales à 2 000 g/mol dont l'indice hydroxyle est de 56 mg KOH/g,
- les « POLYOL C1090, C-2090 et C-3090 » commercialisés par KURARAY ayant une masse moléculaire en nombre (Mₙ) allant de 1 000 à 3 000 g/mol et un indice hydroxyle allant de 35 à 118 mg KOH/g.

De préférence, le polyol P2 est choisi parmi les polyéther polyols, et en particulier parmi les polyéther diols.

Le composant -OH selon l'invention peut comprendre une teneur totale en polyol(s) P2 supérieure ou égale à 5% en poids, de préférence allant de 5% à 50% en poids, préférentiellement de 5% à 40% en poids, avantageusement de 10% à 30% en poids par rapport au poids du composant -OH.

### Autres polyols

Le composant -OH peut comprendre d'autre(s) polyol(s), par exemple choisi(s) dans le groupe constitué :
- des polyéther polyols ayant une masse moléculaire moyenne en nombre comprise entre 600 et 1 000 g/mol, de préférence des polytétraméthylène éther glycol (on peut par exemple citer le TERATHANE^{®} 650 commercialisé par la société INVISTA, ayant une fonctionnalité égale à 2 et un IOH de 173 mg KOH/g) ;
- des polyols ayant une masse moléculaire moyenne en nombre allant de 100 à 600 g/mol, de préférence des polyéther diols (on peut par exemple citer le VORANOL@ P400L commercialisé par la société DOW, qui est un polypropylène glycol ayant une fonctionnalité égale à 2, un IOH moyen de 260 mg KOH/g, et une masse moléculaire moyenne en nombre voisine de 432 g/mol, ou le dipropylène glycol ayant une masse moléculaire moyenne en nombre d'environ 134 g/mol) ; et
- de leurs mélanges

### Additifs

Le composant -OH peut comprendre au moins un additif choisi dans le groupe constitué des plastifiants, des catalyseurs, des solvants, des pigments, des promoteurs d'adhérence, des absorbeurs d'humidité, des stabilisants UV (ou antioxydants), des colorants, des charges, et de leurs mélanges.

Selon un mode de réalisation, le composant -OH comprend au moins un catalyseur. Il peut s'agir de tout type de catalyseur utilisé dans ce domaine.

De préférence, le composant -OH comprend au moins un catalyseur choisi dans le groupe constitué :
- des catalyseurs organo-métalliques, de préférence à l'exception des catalyseurs à base d'étain ;
- des amines tertiaires ; et
- de leurs mélanges.

Dans le cadre de l'invention, on entend par « catalyseurs organo-métalliques à l'exception des catalyseurs à base d'étain », des catalyseurs organo-métalliques ne comprenant pas d'étain.

Il peut s'agir d'un mélange de catalyseurs d'une même famille (par exemple un mélange de plusieurs amines tertiaires ou un mélange de plusieurs composés organométalliques comprenant différents atomes métalliques), ou un mélange de catalyseurs de différentes familles (par exemple un mélange d'une amine tertiaire et d'un composé organo-métallique).

Dans le cadre de l'invention, on entend par « catalyseurs organo-métalliques », des catalyseurs comprenant un radical organique et au moins un métal.

Dans le cadre de l'invention, on entend par « radical organique », un radical comprenant au moins un atome de carbone.

Les composés organo-métalliques peuvent comprendre les composés organométalliques (composés comprenant au moins une liaison covalente métal-carbone), les alcoolates métalliques, les carboxylates métalliques, et les complexes de coordination métalliques avec un(des) ligand(s) organique(s).

A titre d'exemple de ligand organique, on peut citer l'acétylacétonate.

L'atome métallique des composés organo-métalliques peut être tout atome métallique connu de l'homme du métier, de préférence à l'exception de l'étain, et peut en particulier être choisi parmi l'aluminium, le manganèse, l'argent, le cuivre, l'or, le platine, le palladium, le ruthénium, le rhodium, le molybdène, le zinc, le cobalt, le fer, le nickel, le bismuth, le titane, ou le zirconium. De préférence, l'atome métallique des composés organo-métalliques est choisi parmi l'aluminium, le zinc, le fer, le bismuth, le titane, l'or et le zirconium.

Les catalyseurs organo-métalliques peuvent comprendre plusieurs atomes métalliques, tels que par exemple du bismuth et du zinc.

De préférence, les catalyseurs organo-métalliques sont des catalyseurs à base de bismuth et/ou zinc.

Dans le cadre de l'invention, on entend par « catalyseur à base de bismuth », un catalyseur comprenant du bismuth. Un tel catalyseur peut donc comprendre d'autres atomes métalliques en plus du bismuth, comme par exemple du zinc.

En particulier, les catalyseurs organo-métalliques, et notamment les catalyseurs à base de bismuth, comprennent exclusivement du bismuth comme atome métallique (catalyseurs de bismuth).

Les composés organométalliques (composés comprenant au moins une liaison covalente métal-carbone) peuvent être des carboxylates de composés organométalliques.

Les alcoolates métalliques peuvent être choisis dans le groupe constitué du tétrabutanolate de titane, du tétraisopropylate de titane, du tétrabutanolate de zirconium, du tétratisopropylate de zirconium, du phénolate de bismuth, et de leurs mélanges.

Les carboxylates métalliques peuvent être ceux dans lesquels l'acide carboxylique contient de 2 à 20 atomes de carbones, de préférence de 4 à 14 atomes de carbone. On peut par exemple citer à titre d'acides carboxyliques, l'acide butyrique, l'acide isobutyrique, l'acide caproïque, l'acide caprylique, l'acide 2-éthylhexanoïque, l'acide caprique, l'acide laurique, l'acide myristique, l'acide palmitique, l'acide stéarique, l'acide iso-stéarique, l'acide abiétique, l'acide néodécanoïque, l'acide 2,2,3,5-tétraméthylhexanoïque, l'acide 2,4-diméthyl-2-isopropylpentanoïque, l'acide 2,5-diméthyl-2-ethylhexanoïque, l'acide 2,2-diméthyloctanoïque, l'acide 2,2-diéthylhexanoïque, et l'acide arachidique.

Les carboxylates métalliques peuvent être des mono-carboxylates, des dicarboxylates, des tricarboxylates, ou leurs mélanges.

Les carboxylates métalliques peuvent être choisis dans le groupe constitué des carboxylates à base de zinc, des carboxylates à base de bismuth, des carboxylates à base de bismuth et de zinc, et de leurs mélanges, les carboxylates métalliques étant en particulier choisis dans le groupe constitué des carboxylates de zinc, des carboxylates de bismuth, des carboxylates de bismuth et de zinc, et de leurs mélanges.

Parmi les carboxylates de bismuth, on peut par exemple citer le BORCHI^{®} KAT 320 (numéro CAS : 67874-71-9, 2-éthyl hexanoate de bismuth), le BORCHI^{®} KAT 315 (numéro CAS : 34364-26-6, néodécanoate de bismuth) disponibles chez BORCHERS, le KKAT XK-651 disponible chez KING INDUSTRIES, le KK KKAT XC-B221 disponible chez KING INDUSTRIES, et le COSCAT 83 (néodécanoate de bismuth, acide néodécanoïque) disponible chez VERTELLUS.

Parmi les carboxylates de zinc, on peut par exemple citer le BORCHI^{®} KAT 0761 (numéro CAS : 27253-29-8, néodécanoate de zinc) disponible chez BORCHERS, le TIB KAT 616 (néodécanoate de zinc) disponible chez TIB CHEMICALS.

Parmi les carboxylates de bismuth et de zinc, on peut par exemple citer le TIB KAT 244 (2-éthyl hexanoate de bismuth et de zinc) de TIB CHEMICALS, ou le BORCHI^{®} KAT VP 0244 (mélange de néodécanoate de zinc et de néodécanoate de bismuth) de chez BORCHERS.

De préférence, le catalyseur est choisi parmi les carboxylates métalliques, et plus particulièrement les carboxylates à base de zinc, les carboxylates à base de bismuth, les carboxylates à base de bismuth et de zinc, et leurs mélanges. En particulier, le catalyseur est choisi parmi le 2-éthyl hexanoate de bismuth, le 2-éthyl hexanoate de zinc, le néodécanoate de bismuth, le néodécanoate de zinc, le 2-éthyl hexanoate de zinc et de bismuth, le néodécanoate de bismuth et de zinc, et leurs mélanges.

Les complexes de coordination métalliques avec un(des) ligand(s) organique(s) peuvent être choisis dans le groupe constitué de l'acétylacétonate de zinc, de l'acétylacétonate de titane (par exemple disponible commercialement sous la dénomination TYZOR^{®} AA75 auprès de la société DORF KETAL), du tétraacétylacétonate de titane, du trisacétylacétonate d'aluminium, des chélates d'aluminium tel que par exemple le monoacétylacetonate bis-(éthylacétoacétate) (par exemple disponible commercialement sous la dénomination K-KAT^{®} 5218 auprès de la société KING INDUSTRIES), du tétraacétylacétonate de zirconium, du diisopropoxybis(éthylacétonato)titane, et de leurs mélanges.

De préférence, les amines tertiaires sont choisies dans le groupe constitué de la triéthylamine, de la tributylamine, de la N,N-diméthylcyclohexylamine, de la diméthylbenzylamine, de la N,N'-diméthyl pipérazine, N,N,N,N-tétraméthyl propane-1,3-diamine, bis(2-dimethylaminoethyl)ether, du 2-diméthylaminoéthyl-3-diméthylaminopropyl éther, de la N-méthyl morpholine, de la N-éthyl morpholine, de la N-méthoxyethyl morpholine, 2,2'-dimorpholinodiéthyl éther (DMDEE), de la bis(2,6-dimethylmorpholinoethyl)ether, de la bis(3,5-dimethylmorpholinoethyl)ether, de la N,N-diméthylphénylamine, de la N,N,N,N-tetramethylbutane-1,3-diamine, de la N,N,N,N-tetramethylpropane-1,3-diamine, de la N,N,N,N-tetramethylhexane-1,6-diamine, du 1-méthyl imidazole, du 2-méthyl-1-vinyl imidazole, du 1-allyl imidazole, du 1-phenyl imidazole, du 1,2,4,5-tétraméthyl imidazole, du pyrimidazole, de la 4-diméthylamino pyridine, de la 4-pyrrolidino pyridine, de la 4-morpholino pyridine, de la 4-méthyl pyridine, du N-decyl-2-méthyl imidazole, du N-dodecyl-2-méthyl imidazole, de la tris(dimethylaminopropyl) hexahydrotriazine, de la tétraméthylguanidine, du 1,8-diazabicyclo[5.4.0]-7-undécène (DBU), du 1,4-diazabicyclo[2.2.2]octane (DABCO), du 1,5-diazabicyclo[4.3.0]non-5-ène (DBN), de la quinuclidine, du bis-diméthylaminométhyl phénol, du 2-(2-diméthylaminoéthoxy)-éthanol, du quinuclidinol, de l'hydroxyméthyl quinuclidinol, et de leurs mélanges.

En particulier, les amines tertiaires sont choisies parmi le 1,8-diazabicyclo[5.4.0]undec-7-ène (DBU), le 1,5-diazabicyclo[4.3.0]non-5-ène (DBN), le 2,2'-dimorpholinodiéthyl éther (DMDEE), le 1,4-diazabicyclo[2.2.2]octane (DABCO), et leurs mélanges.

Selon un mode de réalisation préféré, le composant -OH comprend :
- un catalyseur choisi parmi les catalyseurs organo-métalliques, en particulier parmi les catalyseurs organo-métallique à base de bismuth et/ou zinc tels que par exemple les carboxylates à base de zinc, des carboxylates à base de bismuth, les carboxylates à base de bismuth et de zinc, ou leurs mélanges, et avantageusement parmi les carboxylates de zinc, les carboxylates de bismuth, les carboxylates de bismuth et de zinc, et leurs mélanges ; et
- éventuellement un catalyseur choisi parmi les amines tertiaires, en particulier 1,4-diazabicyclo[2.2.2]octane (DABCO).

Le composant -OH peut comprendre une quantité totale en catalyseur(s) allant de 0,05% à 15% en poids, préférentiellement de 0,1 à 10% en poids, avantageusement de 0,1% à 5% en poids par rapport au poids total du composant -OH.

Selon un mode de réalisation, le composant -OH comprend au moins une charge choisie parmi les charges minérales, les charges organiques, et leurs mélanges.

A titre d'exemple de charge(s) minérale(s) utilisable(s), on peut utiliser n'importe quelle(s) charge(s) minérale(s) habituellement utilisée(s) dans le domaine des compositions adhésives. Ces charges se présentent typiquement sous la forme de particules de géométrie diverse. Elles peuvent être par exemples sphériques, fibreuses, ou présenter une forme irrégulière.

De préférence, la(les) charge(s) est(sont) choisie(s) dans le groupe constitué de l'argile, du quartz, des charges carbonatées, du kaolin, du gypse, des argiles, et de leurs mélanges, préférentiellement la(les) charge(s) est(sont) choisie(s) parmi les charges carbonatées, telles que les carbonates de métaux alcalin ou alcalino-terreux, et plus préférentiellement le carbonate de calcium ou la craie.

Ces charges peuvent être non traitée ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

A titre d'exemple de charge(s) organique(s) utilisable(s), on peut utiliser n'importe quelle(s) charge(s) organique(s) et notamment polymérique(s) habituellement utilisée(s) dans le domaine des compositions adhésives.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

La taille moyenne de particule de la (des) charge(s) utilisable(s) est de préférence inférieure ou égale à 100 microns, préférentiellement inférieure ou égale à 30 microns, avantageusement inférieure ou égale à 10 microns.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

Le composant -OH peut comprendre une quantité totale en charge(s) allant de 1% à 50% en poids, préférentiellement de 10% à 45% en poids, avantageusement de 20% à 40% en poids par rapport au poids total du composant -OH.

De préférence, le composant -OH a un IOH moyen allant de 150 à 170 mg KOH/g, et préférentiellement de 155 à 165 mg KOH/g.

### Composant -NCO

La composition selon l'invention comprend un composant -NCO comprenant :
A) au moins un polyuréthane comportant au moins deux groupements terminaux NCO obtenu par réaction de polyaddition :
   - d'une composition comprenant au moins un diisocyanate, ledit diisocyanate étant de préférence dissymétrique ; et
   - d'une composition comprenant au moins un polyol,
B) au moins un polyisocyanate comprenant au moins trois fonctions isocyanate - NCO, de préférence au moins quatre fonctions isocyanate -NCO.

### A) Polyuréthane à terminaisons NCO

Le composant -NCO peut comprendre une quantité totale en polyuréthane(s) comportant au moins deux groupements terminaux NCO susmentionné allant de 15% à 95% en poids du composant -NCO, de préférence de 20% à 90% en poids, préférentiellement de 35% à 85% en poids, et encore plus avantageusement de 35% à 60% en poids par rapport au poids total du composant -NCO.

Selon un mode de réalisation, le(s) monomère(s) diisocyanate(s) est(sont) choisi(s) dans le groupe constitué :
- de l'isophorone diisocyanate (IPDI),
- du toluène diisocyanate (TDI), et en particulier du 2,4-toluène diisocyanate ;
- de la forme hydrogénée du TDI, et en particulier de la forme hydrogénée du 2,4-toluène diisocyanate et/ou la forme hydrogénée du 2,6-TDI : 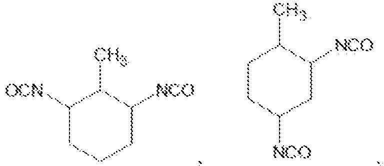
- du diisocyanate de diphénylméthane (MDI), et en particulier du 2,4'-diisocyanate de diphénylméthane (2,4'-MDI) et/ou du 4,4'-MDI ;
- de la forme hydrogénée du MDI, et en particulier de la forme hydrogénée du 2,4'-diisocyanate de diphénylméthane (2,4'-MDI) ; et
- de leurs mélanges.

En particulier, il(s) peu(ven)t être utilisé(s) sous la forme d'une composition de diisocyanates comprenant au moins 90% en poids, et de préférence au moins 95% en poids par rapport au poids de ladite composition, d'un monomère diisocyanate, de préférence d'un monomère diisocyanate dissymétrique.

Plus préférentiellement, le monomère(s) diisocyanate(s) dissymétrique(s) est(sont) choisi(s) parmi l'isomère 2,4'-MDI, l'isomère 2,4-TDI, un mélange d'isomères de MDI à 90% en poids au moins, et de préférence à 95% en poids au moins, d'isomère 2,4'-MDI, ou un mélange d'isomères de TDI à 90% en poids au moins, et de préférence à 95% en poids au moins, d'isomère 2,4-TDI, lesdits pourcentages étant exprimés respectivement par rapport au poids du mélange d'isomères.

Le(s) monomère(s) diisocyanate(s) utilisable(s) pour préparer le polyuréthane à comprenant au moins deux groupements NCO A) susmentionné est (sont) typiquement disponible(s) dans le commerce. On peut par exemple citer le SCURANATE^{®} T100 commercialisé par la société VENCOREX et correspondant à un mélange d'isomères de TDI comprenant au moins 99% en poids d'isomère 2,4-TDI, et dont le pourcentage de NCO est de 48,1%.

La composition comprenant ledit au moins un diisocyanate, peut également comprendre au moins un triisocyanate, par exemple choisi parmi les isocyanurates, les biurets, les adduits de diisocyanate et de triols, et leurs mélanges.

De préférence, la composition est constituée dudit au moins un diisocyanate. Dans ce cas, la composition ne peut donc pas comprendre de triisocyanate.

Le(s) polyol(s) utilisable(s) pour préparer le polyuréthane A) susmentionné est (sont) de préférence choisi(s) parmi les polyéther polyols (de préférence polyéther diols), les polyester polyols, et leurs mélanges.

Les mélanges de polyéther polyol(s) et de polyester polyol(s) peuvent être :
- un mélange de polyéther polyols de natures différentes avec un polyester polyol ;
- un mélange de polyéther polyols de natures différentes avec un mélange de polyester polyols de natures différentes ; ou
- un mélange d'un polyéther polyol avec un mélange de polyester polyols de natures différentes.

De préférence, le polyuréthane A) est préparé à partir d'un mélange d'au moins un polyéther polyol, de préférence polyéther diol, et d'au moins un polyester polyol, de préférence polyester diol.

Le(s) polyol(s) utilisable(s) pour préparer le polyuréthane A) susmentionné peu(ven)t être choisi(s) parmi ceux dont la masse moléculaire moyenne en nombre Mn est inférieure ou égale à 5 000 g/mol, de préférence inférieure ou égale à 4 000 g/mol, avantageusement strictement inférieure à 2 000 g/mol, et plus préférentiellement ceux dont la masse moléculaire moyenne en nombre Mn va de 400 à 1 500 g/mol.

De préférence, le(s) polyol(s) utilisable(s) pour préparer le polyuréthane A) susmentionné présente(nt) un indice hydroxyle (IOH) allant de 28 à 281 mg KOH/g, de préférence de 100 à 281 mg KOH/g.

Le(s) polyéther polyol(s) utilisable(s) pour préparer le polyuréthane A) susmentionné est (sont) de préférence choisi(s) parmi les polyoxyalkylène-polyols (de préférence polyoxyalkylène-diols), dont la partie alkylène (saturée), linéaire ou ramifiée, comprend de 2 à 4 atomes de carbone, et de préférence de 2 à 3 atomes de carbone.

De préférence, le(s) polyéther polyol(s) utilisable(s) pour préparer le polyuréthane A) susmentionné est (sont) choisi(s) parmi les polyoxypropylène polyols ayant un indice de polydispersité allant de 1 à 1,4, en particulier allant de 1 à 1,3. Cet indice correspond au rapport de la masse moléculaire moyenne en poids Mw à la masse moléculaire moyenne en nombre Mn du polyéther polyol (Ip = Mw/Mn) déterminées par GPC.

De préférence, le(s) polyéther polyol(s) utilisable(s) pour préparer le polyuréthane à A) possède(nt) un IOH allant de 50 à 281 mg KOH/g.

Le(s) polyéther polyol(s) suscité(s) peu(ven)t être préparé(s) de manière conventionnelle, et/ou est (sont) typiquement disponible(s) dans le commerce, comme illustré dans les exemples.

Le(s) polyester polyol(s), de préférence polyester diols, utilisable(s) pour préparer le polyuréthane A) susmentionné peu(ven)t être choisi(s) parmi :
- des polyester polyols issus de la polycondensation d'au moins un diacide carboxylique ou d'au moins un de ses anhydrides ou diesters correspondants, avec au moins un diol,
- des polyester polyols issus d'une polymérisation avec ouverture de cycle d'au moins une lactone cyclique avec au moins diol, tels que les polycaprolactone polyols.

Le(s) diacide(s) carboxylique(s) utilisable(s) pour la synthèse des polyester polyols suscités peuvent être linéaire(s) ou ramifié(s), cyclique(s) ou acyclique(s), saturé(s) ou insaturé(s), aromatique(s) ou aliphatique(s), et comprennent de préférence de 3 à 40 atomes de carbone, et plus préférentiellement de 5 à 10 atomes de carbone. Il peut par exemple s'agir de l'acide adipique, de l'acide phtalique, de l'acide succinique, ou de leurs mélanges.

Le(s) diol(s) utilisable(s) pour la synthèse des polyester polyols suscités peu(ven)t être choisi(s) parmi les polyalkylène diols, les polyoxyalkylène-diols, et les mélanges de ces composés, la partie alkylène (saturée) de ces composés, étant de préférence linéaire ou ramifiée, et comprenant de préférence de 2 à 40 atomes de carbone, et plus préférentiellement de 2 à 8 atomes de carbone. Il peut par exemple s'agir du monoéthylène glycol, du diéthylène glycol, du 1,2-propanediol, du 1,3-propanediol du 1,4-butanediol, du 1,6-hexanediol, ou de leurs mélanges.

Le(s) lactone(s) cyclique(s) utilisable(s) pour la synthèse des polyester polyols suscités comprennent de préférence de 3 à 7 atomes de carbone.

De préférence, le(s) polyester polyol(s) utilisable(s) pour préparer le polyuréthane A) susmentionné possède(nt) un IOH allant de 90 à 281 mg KOH/g, préférentiellement de 90 à 280 mg KOH/g, et avantageusement de 90 à 150 mg KOH/g.

Le(s) polyester polyol(s) utilisable(s) pour préparer le polyuréthane A) susmentionné peu(ven)t être préparé(s) de manière conventionnelle, et/ou est (sont) typiquement disponible(s) dans le commerce comme illustré dans les exemples.

Selon un mode de réalisation, le polyuréthane A) susmentionné est obtenu à partir :
- d'un mélange de polyoxyalkylène-polyols, dont la partie alkylène (saturée), linéaire ou ramifiée, comprend de 2 à 4 atomes de carbone, et de préférence de 2 à 3 atomes de carbone, lesdits polyoxyalkylène-polyols ayant de préférence chacun un IOH allant de 50 à 281 mg KOH/g ;
- d'un mélange de :
   ∘ polyester polyol(s) tel(s) que défini(s) ci-dessus, et possédant notamment un IOH allant de 90 à 281 mg KOH/g, de préférence de 200 à 281 mg KOH/g.; et
   ∘ polyoxyalkylène-diol(s), dont la partie alkylène (saturée), linéaire ou ramifiée, comprend de 2 à 4 atomes de carbone, et de préférence de 2 à 3 atomes de carbone, le(s)dit(s) polyoxyalkylène-diol(s) ayant de préférence un IOH allant de 50 à 281 mg KOH/g, de préférence de 90 à 150 mg KOH/g.

De préférence, les quantités en monomère(s) isocyanate(s) et en polyol(s) utilisés pour la synthèse du polyuréthane A) susmentionné sont telles que le rapport molaire NCO/OH, noté r₁, va de 1,5 à 2,0, plus préférentiellement de 1,7 à 1,9.

Ce rapport r₁ correspond au rapport du nombre de groupes -NCO (présents dans la quantité totale de monomère(s) isocyanate(s) utilisé(s) pour synthétiser le polyuréthane à terminaisons NCO A)) sur le nombre de groupes -OH (présents dans la quantité totale de polyol(s) utilisé(s) pour synthétiser le polyuréthane à terminaisons NCO A)).

Les quantités pondérales de monomère(s) isocyanate(s) et de polyol(s) à charger dans le réacteur sont notamment déterminées sur la base de ce rapport ainsi que l'indice d'hydroxyle IOH du polyol ou du mélange de polyols mesuré expérimentalement ou calculé à partir des IOH des polyols présents et de leur teneur pondérale respective dans ledit mélange.

Le polyuréthane A) tel que défini précédemment peut être préparé en présence ou non d'au moins un catalyseur de réaction, préférentiellement à une température de réaction T1 inférieure à 95°C et de préférence allant de 65°C à 80°C, et de préférence dans des conditions anhydres.

L'ensemble des conditions d'obtention du polyuréthane A) susdécrites permet avantageusement d'obtenir une concentration en monomère(s) isocyanate(s) non réagi(s) suffisamment basse en fin de réaction pour que le polyuréthane A) puisse être utilisé directement après sa synthèse dans la préparation du composant -NCO, sans qu'il ne soit nécessaire de le traiter, par exemple par des procédés de purification, distillation ou extraction sélective tels qu'employés dans l'art antérieur, pour éliminer ou réduire l'excès de monomère(s) isocyanate(s) non réagi(s) présent(s) dans le produit de réaction.

Le composant -NCO obtenu peut ainsi comprendre une teneur en monomère(s) isocyanate(s) (de préférence diisocyanate(s)) aliphatique(s) inférieure ou égale à 0,5% en poids par rapport au poids du composant -NCO, et une teneur en monomère(s) isocyanate(s) (de préférence diisocyanate(s)) aromatique(s) inférieure ou égale à 0,1% en poids par rapport au poids du composant -NCO.

### B) Polyisocyanate comprenant au moins trois fonctions isocyanate -NCO

Le composant -NCO peut comprendre une teneur totale en polyisocyanate(s) comprenant au moins trois fonctions -NCO B) allant de 40% à 95% en poids, de préférence de 45% à 90% en poids, préférentiellement de 50% à 85% en poids, et avantageusement de 45% à 65% en poids par rapport au poids total du composant -NCO.

Le composant -NCO comprend au moins un polyisocyanate comprenant au moins trois fonctions isocyanate -NCO, ledit polyisocyanate étant choisi dans le groupe constitué des biurets, des isocyanurates, des adduits de diisocyanates et de triols, et de leurs mélanges, de préférence choisi parmi les biurets.

Les polyisocyanates comprenant au moins trois fonctions isocyanate B) peuvent être choisis parmi les polyisocyanates monomériques, les polyisocyanates oligomériques, les polyisocyanates polymériques, et leurs mélanges.

Les polyisocyanates oligomériques sont typiquement des mélanges de polyisocyanates ayant des degrés d'oligomérisation différents.

Par exemple, les biurets peuvent être des mélanges de biurets monomériques, oligomériques et/ou polymériques. En particulier, les biurets sont des mélanges comprenant des biurets triisocyanates (monomériques), des biurets oligomériques et éventuellement des biurets polymériques.

En particulier, le(s) isocyanurate(s) peuvent être utilisé(s) sous la forme d'un mélange technique de (poly)isocyanurate(s) de pureté supérieure ou égale à 70% en poids en isocyanurate(s) par rapport au poids dudit mélange.

De préférence, le(s) isocyanurate(s) de diisocyanate utilisable(s) selon l'invention répond(ent) à la formule générale (I) suivante : 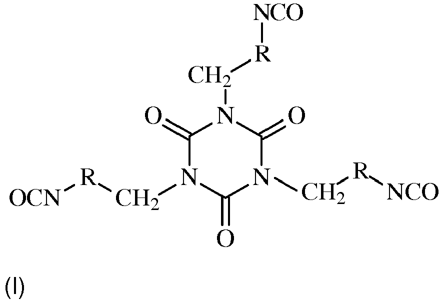 dans laquelle :
R représente un groupe alkylène, linéaire, ramifié ou cyclique, aliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.
A titre d'exemple d'isocyanurate(s) de diisocyanate utilisables selon l'invention, on peut citer :
   - l'isocyanurate d'hexaméthylène diisocyanate (HDI) ayant la formule suivante : 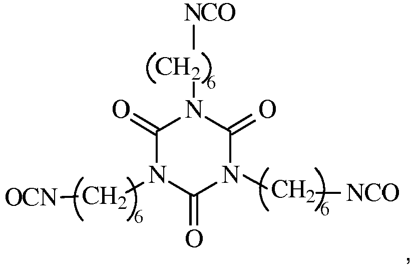
   - l'isocyanurate d'isophorone diisocyanate (IPDI) ayant la formule suivante : 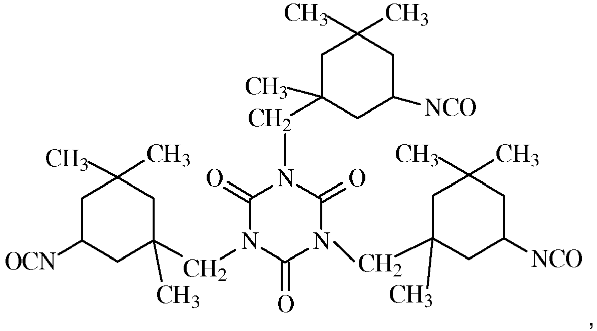
   - l'isocyanurate de pentaméthylène diisocyanate (PDI) ayant la formule suivante : 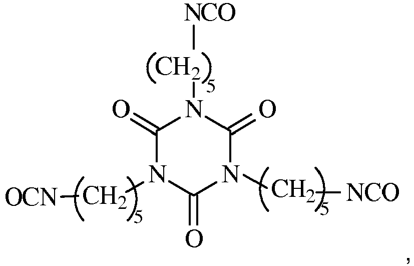
   - l'isocyanurate du méta-xylène diisocyanate (m-XDI) ayant la formule suivante : 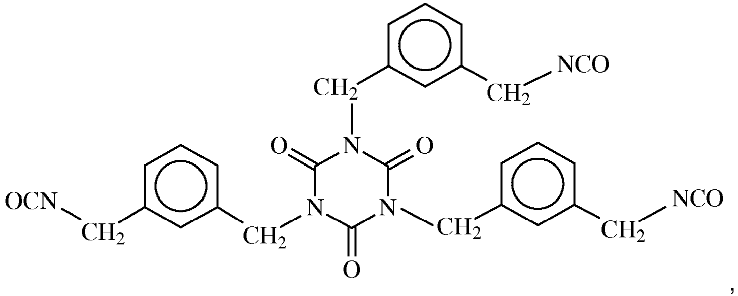
   - l'isocyanurate du m-XDI, sous forme hydrogénée ayant la formule suivante :

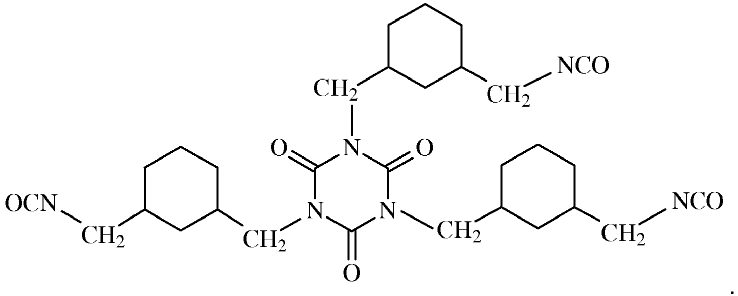

Le(s) diisocyanate(s) utilisable(s) pour préparer les adduits de diisocyanate et triol est (sont) de préférence choisi(s) parmi les monomères de diisocyanates aromatiques ou aliphatiques, et leurs mélanges, et plus préférentiellement les monomères diisocyanates aliphatiques. Le(s) monomère(s) de diisocyanate peu(ven)t être sous forme d'isomère pur ou sous forme de mélange d'isomères.

A titre de triols utilisables pour préparer les adduits de diisocyanate et triol, on peut citer par exemple le Glycérol, Triméthylolméthane (TMM), Triméthyloléthane (TME) et Triméthylolpropane (TMP). De préférence, on utilise le TMP.

A titre d'exemple d'adduits de diisocyanates et de triols utilisables selon l'invention, on peut citer l'adduit de méta-xylène diisocyanate et de triméthylolpropane, tel que représenté ci-dessous.

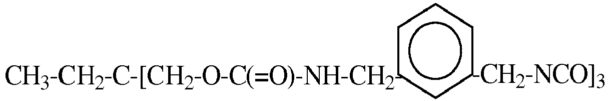

De préférence, le(s) biuret(s) utilisable(s) selon l'invention est(sont) un(des) biuret(s) monomèrique(s), oligomérique(s) ou polymérique(s) d'hexaméthylène diisocyanate (HDI), d'isophorone diisocyanate (IPDI), de pentaméthylène diisocyanate (PDI), de méta-xylylène diisocyanate (m-XDI) ou de de méta-xylylène diisocyanate hydrogéné (m-HXDI).

Selon un mode de réalisation, le composant -NCO comprend B) un mélange de polyisocyanates, lesdits polyisocyanates comprenant chacun au moins trois fonctions NCO, la fonctionnalité moyenne NCO dudit mélange de polyisocyanates étant supérieure ou égale à 3, de préférence supérieure ou égale à 3,2, encore plus préférentiellement supérieure ou égale à 3,5.

Par « fonctionnalité moyenne NCO d'un mélange », on entend le nombre moyen de fonctions NCO par mole de mélange.

Parmi les polyisocyanates B) selon l'invention, on peut par exemple citer :
- les biurets de HDI par exemple commercialisés par BAYER sous les dénominations DESMODUR^{®} N100 et N3200, ou ceux commercialisés par VENCOREX sous les dénominations TOLONATE^{®} HDB et HDB-LV,
- les isocyanurates de HDI, par exemple commercialisés par Bayer sous les dénominations DESMODURr^{®} N3300, N3600 et N3790BA, ou ceux commercialisés par VENCOREX sous les dénominations TOLONATE^{®} HDT, HDT-LV et HDT-LV2.

Selon un mode de réalisation, le rapport molaire du nombre de groupes NCO présents dans la quantité totale de monomère(s) diisocyanate(s) utilisé(s) pour la synthèse du polyuréthane à terminaisons NCO A) sur le nombre de groupes NCO présents dans la quantité totale de polyisocyanate(s) B) présent(s) dans le composant -NCO, noté r₂, va de préférence de 3 à 8,5, plus préférentiellement, de 3 à 7, de manière encore plus préférée de 3 à 5, et mieux encore de 3 à 4.

Le composant -NCO peut comprendre une teneur massique en groupements NCO allant de 14% à 20%, de préférence de 15% à 18% en masse par rapport à la masse totale dudit composant -NCO.

Le composant -NCO peut être préparé par simple mélange de ses ingrédients à une température inférieure ou égale à 85°C, et de préférence allant de 60°C à 80°C, préférentiellement dans des conditions anhydres.

Selon un mode de réalisation préféré, le composant -NCO selon l'invention comprend :
- de 15% à 80% en poids, de préférence de 30% à 70% en poids de polyuréthane(s) A) tel(s) que défini(s) ci-dessus ; et
- de 30% à 80% en poids, de préférence de 40% à 70% en poids de polyisocyanate(s) comprenant au moins trois fonctions isocyanate -NCO B) tel(s) que défini(s) ci-dessus.

### Additifs

Le composant -NCO peut comprendre au moins un additif choisi dans le groupe constitué des plastifiants, des catalyseurs, des solvants, des pigments, des promoteurs d'adhérence, des absorbeurs d'humidité, des stabilisants UV (ou antioxydants), des colorants, des charges, et de leurs mélanges.

La teneur totale en additif(s) susmentionné(s) dans le composant -NCO peut aller de 0% à 35% en poids, de préférence de 0% à 20% en poids, avantageusement de 0% à 15% en poids, et encore plus avantageusement de 0% à 10% en poids par rapport au poids total dudit composant -NCO.

De préférence, le composant -NCO ne comprend pas de solvant, ledit solvant pouvant être un solvant organique tel que l'acétate d'éthyle, la méthyl éthyl cétone, le tétrahydrofurane, le méthyl-tétrahydrofurane, ou encore parmi l'ISANEO (à base d'isoparaffines, disponible auprès de la société TOTAL) ou l'EXXOL^{®} D80 (à base d'hydrocarbures aliphatiques, disponible auprès de la société EXXON MOBIL Chemical) ou encore le chlorobenzène, le naphta, l'acétone, le n-heptane, le xylène.

Selon un mode de réalisation, le composant -NCO possède une viscosité mesurée à température ambiante (23°C) allant de 15 000 à 70 000 mPa.s, de préférence allant de 20 000 à 50 000 mPa.s.

De préférence, le composant -NCO susmentionné comprend :
A) au moins un polyuréthane comportant au moins deux groupements terminaux NCO obtenu par réaction de polyaddition :
   - d'une composition comprenant au moins un diisocyanate dissymétrique de préférence le toluène diisocyanate (TDI) (sous forme d'un seul isomère ou d'un mélange d'isomères) ;
   - d'une composition comprenant au moins un polyéther diol et un polyester diol tels que définis précédemment ;
B) au moins un polyisocyanate comprenant au moins trois fonctions isocyanate - NCO choisi parmi les isocyanurates, les biurets et leurs mélanges ;

la quantité totale en polyuréthane(s) A) susmentionné allant de 30% à 95% en poids du composant -NCO, de préférence de 35% à 60% en poids par rapport au poids total du composant -NCO ; et
la quantité totale en polyisocyanate B) susmentionné allant de 40% à 95% en poids, de préférence de 50% à 85% en poids par rapport au poids total du composant -NCO.

### Composition

De préférence, la composition selon l'invention est une composition adhésive.

La composition selon l'invention comprend au moins un agent de rhéologie, de préférence compris dans le composant -OH susmentionné.

De préférence, la composition selon l'invention est telle que le composant -OH comprend au moins un agent de rhéologie, et le composant -NCO comprend au moins un agent de rhéologie pouvant être identique ou différent de celui du composant -OH.

A titre d'exemple d'agent(s) de rhéologie utilisable(s), on peut citer n'importe quel agent de rhéologie habituellement utilisé dans le domaine des compositions adhésives.

De préférence, la composition comprend au moins un agent de rhéologie choisi parmi les agents thixotropiques, et plus préférentiellement parmi:
- les plastisols de PVC, correspondant notamment à une suspension de PVC dans un agent plastifiant miscible avec le PVC, obtenue in situ par chauffage à des températures allant de 60 °C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une aminé aliphatique telle que la butylamine. La préparation de tels dérivés d'urée est décrite notamment dans la demande FR 1 591 172 ;
- les cires d'amide, de préférence les cires d'amides micronisées, tel que le CRAYVALLAC^{®} SLT commercialisé par Arkema.

Les cires d'amide sont de préférence des dérivés de l'huile de ricin.

Selon un mode de réalisation, les cires d'amide sont sous forme de particules dont le diamètre d10, qui correspond au diamètre tel que 10% des particules en volume ont une taille inférieure audit diamètre, est supérieure ou égal à 1 µm, et/ou le diamètre d90 (correspondant au diamètre tel que 90% des particules en volume ont une taille inférieure audit diamètre) est inférieur ou égal à 20 µm. Dans la présente demande, cette valeur est exprimée en micromètres et déterminée selon la Norme NF ISO 13320-1 (1999) par diffraction laser sur un appareil de type MALVERN.

Les cires d'amine ont de préférence un indice d'amine allant de 1 à 10 mg KOH/g, de préférence allant de 2 à 5 mg KOH/g et un indice d'hydroxyle allant de 100 à 120 mg KOH/g.

L'indice d'amine représente le nombre de fonctions amine par gramme de produit et est exprimé sous la forme du nombre équivalent de milligrammes de potasse (KOH) utilisés dans le dosage des fonctions amines par gramme de produit. Cet indice peut être mesuré expérimentalement par potentiométrie.

De préférence, l'agent de rhéologie ne contient pas de silice, et en particulier l'agent de rhéologie n'est pas de la silice pyrogénée.

La teneur totale en agent(s) de rhéologie(s) pouvant être utilisée peut varier de 0,1% à 10% en poids, de préférence de 0,1% à 5% en poids, plus préférentiellement de 0,5% à 3% en poids, et avantageusement de 1% à 3% en poids par rapport au poids total de la composition selon l'invention.

La teneur totale en agent(s) de rhéologie(s) pouvant être utilisée dans le composant -OH peut varier de 0% à 10% en poids, de préférence de 0,1% à 10% en poids, plus préférentiellement de 1% à 5% en poids par rapport au poids total du composant -OH.

La teneur totale en agent(s) de rhéologie(s) pouvant être utilisée dans le composant -NCO peut varier de 0% à 10% en poids, de préférence de 0,1% à 10% en poids, plus préférentiellement de 1% à 5% en poids par rapport au poids total du composant -NCO.

De préférence, la composition selon l'invention comprend de la cire d'amide, et de préférence de la cire d'amide micronisée en tant qu'agent de rhéologie, en une teneur totale dans la composition allant de 0,1 % à 10%, de préférence de 1% à 5%, et avantageusement de 1% à 3% en poids par rapport au poids totale de ladite composition.

Selon un mode de réalisation, la composition selon l'invention comprend au moins un catalyseur.

De préférence, la teneur totale en catalyseur(s) dans la composition va de 0,01% à 10% en poids, de préférence de 0,1% à 5% en poids, avantageusement de 0,50% à 2,5 % en poids par rapport au poids total de ladite composition.

Selon un mode de réalisation de l'invention, le ratio volumique composant - OH/composant -NCO, au sein de la composition, va de préférence 1/2 à 2/1, ledit ratio volumique étant avantageusement égal à 1/1.

Selon un mode de réalisation, la composition selon l'invention comprend :
- un composant -NCO comprenant :
   A) au moins un polyuréthane comportant au moins deux groupements terminaux NCO obtenu par réaction de polyaddition :
      - d'une composition comprenant au moins un diisocyanate, de préférence au moins un diisocyanate dissymétrique ; et
      - d'une composition comprenant au moins un polyol,
   B) un mélange de polyisocyanates, lesdits polyisocyanates comprenant chacun au moins trois fonctions isocyanates -NCO et étant choisis dans le groupe constitué des biurets, des isocyanurates, des adduits de diisocyanates et de triols, et de leurs mélanges, en particulier parmi les biurets;
- un composant -OH comprenant :
   - au moins deux polyols P1 différents ayant chacun une masse moléculaire moyenne en nombre strictement inférieure à 500 g/mol, lesdits polyols P1 étant tels que :
      ∘ au moins un polyol P1 comprend au moins quatre fonctions hydroxyle ; et
      ∘ au moins un polyol P1 comprend deux fonctions hydroxyle ;
         et
   - au moins un polyol P2 ayant une masse moléculaire moyenne en nombre strictement supérieure à 1 000 g/mol,
ladite composition comprenant au moins un agent de rhéologie.

La composition selon l'invention présente avantageusement au moins l'une des propriétés suivantes :
- facilement extrudable, notamment lorsque la composition est utilisée en pistolet pour une application en cordons ;
- teneur réduite voire nulle en monomères diisocyanates résiduels, et donc avantageusement non toxique et non dangereuse ;
- réduction voire absence de fluage (ou de coulure) du mélange non encore réticulé, notamment lors de l'application en position verticale ;
- montée en cohésion très rapide permettant avantageusement de manipuler et/ou poncer et/ou découper les assemblages obtenus rapidement après l'application de la composition selon l'invention ;
- conduit, après réticulation, à un joint adhésif ayant :
   ∘ des propriétés adhésives élevées, et avantageusement sans l'emploi d'un primer, et/ou
   ∘ des propriétés mécaniques élevées.

La composition selon l'invention conduit avantageusement à un joint adhésif ayant :
- un module à la rupture supérieur ou égal à 10 MPa, de préférence supérieur ou égal à 12 MPa, préférentiellement supérieur ou égal à 15 MPa, et encore plus préférentiellement supérieur ou égal à 20 MPa ; et/ou
- une élongation à la rupture supérieure ou égale à 5%, de préférence supérieure ou égale à 10%, préférentiellement supérieure ou égale à 15%, avantageusement supérieure ou égale à 20%, et encore plus avantageusement supérieure ou égale à 40%; et/ou
- une dureté shore A strictement supérieure à 80 ; et/ou
- une dureté shore D strictement supérieure à 40 ; et/ou
- une durée de vie en pot inférieure à 5 min, de préférence inférieure ou égale à 2 min.

### B. Kit prêt à l'emploi

Un kit prêt à l'emploi est également divulgué, comprenant le composant OH tel que défini ci-dessus d'une part et le composant NCO tel que défini ci-dessus d'autre part, conditionnées dans deux compartiments séparés.

En effet, la composition selon l'invention peut se trouver sous une forme bicomposante, par exemple au sein d'un kit prêt à l'emploi, comprenant le composant OH d'une part dans un premier compartiment ou fût et le composant NCO d'autre part dans un second compartiment ou fût, dans des proportions adaptées pour un mélange direct des deux composantss, par exemple à l'aide d'une pompe doseuse.

Selon un mode divulgué, le kit comprend en outre un ou plusieurs moyens permettant le mélange des deux composants OH et NCO. De préférence, les moyens de mélange sont choisis parmi des pompes doseuses, des mélangeurs statiques de diamètre adapté aux quantités utilisées.

### C. Utilisations

La présente invention concerne également l'utilisation d'une composition telle que définie ci-dessus, comme adhésif, mastic ou revêtement, de préférence comme adhésif.

La composition peut en particulier servir pour la réparation et/ou le collage dans le domaine de l'automobile, de la construction, ou de la marine.

Dans le domaine de l'automobile, il peut s'agir par exemple de réparation de pièces plastiques ou de de pare-chocs endommagés (rayures).

La présente invention concerne également un procédé d'assemblage de deux substrats par collage, comprenant :
- l'enduction sur au moins un des deux substrats à assembler d'une composition adhésive obtenue par mélange des composants -OH et -NCO tels que définis précédemment; puis
- la mise en contact effective des deux substrats.

Les substrats appropriés sont, par exemple, des substrats inorganiques tels que le béton, les métaux ou les alliages (comme les alliages d'aluminium, l'acier, les métaux nonferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture (comme dans le domaine automobile par exemple).

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif.

### Exemples :

Les ingrédients suivants ont été utilisés :
- VORANOL^{™} P1010 commercialisé par la société DOW est un Polypropylène Glycol (PPG) de fonctionnalité F = 2 ayant un IOH de 110 mg KOH/g soit une masse moléculaire moyenne en nombre (Mn) voisine de 1020 g/mol.
- VORANOL^{™} P2000 commercialisé par la société DOW est un Polypropylène Glycol (PPG) de fonctionnalité F = 2 ayant un IOH de 55 mg KOH/g soit une masse moléculaire moyenne en nombre (Mn) voisine de 2040 g/mol.
- DIANOL^{®} 330 commercialisé par la société CECA est 4,4'-Isopropylidènediphénol propoxylé (PPG) de fonctionnalité F = 2 ayant un IOH de 280 mg KOH/g soit une masse moléculaire moyenne en nombre (Mn) voisine de 401 g/mol.
- LUPRANOL^{®} 3402 commercialisé par la société BASF est une éthylène diamine propoxylée de fonctionnalité F = 4 ayant un IOH de 470 mg KOH/g soit une masse moléculaire moyenne ne nombre (Mn) voisine de 480 g/mol.
- TERATHANE^{®} 650 commercialisé par la société INVISTA est un Polytétrahydrofuranne de fonctionnalité F = 2 ayant un IOH de 173 mg KOH/g soit une masse moléculaire en nombre (Mn) voisine de 650 g/mol.
- SILIPORITE^{®} SA 1720 commercialisée par la société CECA est un tamis moléculaire 3A.
- BORCHI^{®} KAT VP 0244 commercialisé par la société BORCHERS est un mélange de néodécanoate de Bismuth et de néodécanoate de Zinc utilisé comme catalyseur.
- BORCHI^{®} KAT 315 commercialisé par la société BORCHERS : néodécanoate de Bismuth utilisé comme catalyseur.
- DABCO^{®} 33-LV commercialisé par la société EVONIK est une solution de 1,4-Diazabicyclo[2.2.2]octane (ou triéthylènediamine) dans du dipropylène glycol.
- CRAVALLAC^{®} SLT commercialisé par la société ARKEMA est une cire polyamide hydroxylée biosourcée micronisée (d10 min = 1,6 µm et d90 max = 15,5 µm mesurés par Malvern Mastersizer S laser selon la norme ISO13320), ayant un indice d'amine de 3,3 mg KOH/g, un indice d'hydroxyle de 110,7 mg KOH/g et une température d'activation entre 30 et 80°C, utilisée comme agent rhéologique.
- TOLONATE^{™} HDB-LV commercialisée par la société VENCOREX est un polyisocyanate sur base HDI de type biuret de fonctionnalité moyenne F = 3,7, ayant un pourcentage NCO allant de 22,5 à 24,5 % et une teneur en HDI résiduel < 0,1 %, et ayant une viscosité à 25°C allant de 1500 à 2500 mPa.s.
- SCURANATE^{®} T100 commercialisé par la société Vencorex et correspondant à un mélange d'isomères de TDI comprenant au moins 99% en poids d'isomère 2,4-TDI. Son pourcentage de NCO est de 48,1%.
- VORANOL@ P400L commercialisé par la société DOW est un Polypropylène Glycol de fonctionnalité F = 2 ayant un indice d'hydroxyle moyen de 260 mg KOH/g soit une masse moléculaire moyenne en nombre (Mn) voisine de 432 g/mol.
- DEKATOL^{®} 3008 fabriqué par la société BOSTIK est un à un polyester polyol de fonctionnalité égale à 2, de masse molaire moyenne en nombre Mn voisine de 1060 g/mol et dont l'indice hydroxyle va de 102 à 112 mg KOH/g. Il s'agit d'un produit issu de la condensation d'acide adipique, de diéthylèneglycol et de monoéthylèneglycol.
- AEROSIL^{®} R202 commercialisé par la société EVONIK est une silice pyrogénée hydrophobe de surface spécifique (BET) voisine de 100 m²/g.
- OMYA^{®} BL 200 commercialisée par la société OMYA est une craie (carbonate de calcium) de granulométrie voisine de 9 µm.

### Exemple 1 : Préparation du composant -NCO :

### 1.A. Préparation du polyuréthane (PU) à terminaisons NCO :

Le polyuréthane PU à terminaisons NCO utilisé dans les exemples suivants a été préparé à l'aide des différents ingrédients figurant dans le tableau 1. Les quantités de diisocyanate(s) et de polyol(s) utilisés (exprimées en % en poids de produit commercial par rapport au poids de composant -NCO) correspondent à un ratio molaire NCO/OH (r1) de 1,75 environ tel qu'indiqué dans le tableau 1.

Le(s) diisocyanate(s) et le(s) polyol(s) sont mélangés dans un réacteur maintenu sous agitation constante et sous azote, à une température T1 allant de 65°C à 80°C. La température est contrôlée de manière à ne pas dépasser 82°C.

L'ensemble est maintenu en mélange à cette température jusqu'à la consommation complète des fonctions hydroxyle des polyols.

Le taux d'avancement de la réaction est contrôlé en mesurant la teneur en groupe NCO par un dosage de dicyclohexylamine en retour, à l'aide d'acide chlorhydrique selon la méthode interne de dosage des NCO libres. La réaction est stoppée lorsque la teneur en groupe NCO mesurée est environ égal à la teneur en groupe NCO souhaitée.

### 1.B. Préparation du composant -NCO par mélange de ses ingrédients :

Dans le même réacteur maintenu sous agitation constante et sous azote, le polyuréthane à terminaisons NCO obtenu est ensuite mélangé aux autres ingrédients constituant le composant -NCO, dans les proportions indiquées dans le tableau 1 (exprimées en % en poids de produit commercial par rapport au poids total de composant - NCO).

Après homogénéisation du mélange (30 à 120 minutes), on mesure la teneur en groupe NCO et la teneur pondérale en monomère diisocyanate, dans le composant -NCO respectivement.

La teneur en groupe NCO dans le composant -NCO, exprimée en pourcentage en poids par rapport au poids du composant -NCO (%NCO), est mesurée selon la norme NF T52-132.

La teneur pondérale en monomère diisocyanate est mesurée par une méthode d'HPLC munie d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 4,5, longueur d'onde de détection : 254nm).

Pour l'ensemble des exemples, la teneur pondérale en monomère diisocyanate présente dans le composant -NCO est inférieure ou égale à 0,1% en poids du poids dudit composant.

### Exemple 2 : Préparation du composant -OH

Dans un réacteur maintenu sous agitation constante et sous azote, les différents ingrédients constituant le composant -OH sont mélangés dans les proportions indiquées dans le tableau 1 à une température allant de 20°Cà 80°C.

Après homogénéisation du mélange (3 heures environ), on mesure la teneur en groupe OH dans le composant -OH, exprimée en milligramme de KOH par gramme de composant -OH (mg KOH/g).

### Exemple 3 : Préparation de la composition adhésive

Le composant -NCO préparé à l'exemple 1 et le composant -OH préparé à l'exemple 2 ont été mélangés.

Le mélange est effectué via l'utilisation d'une bi-cartouche de 50ml à une température de 23°C environ.

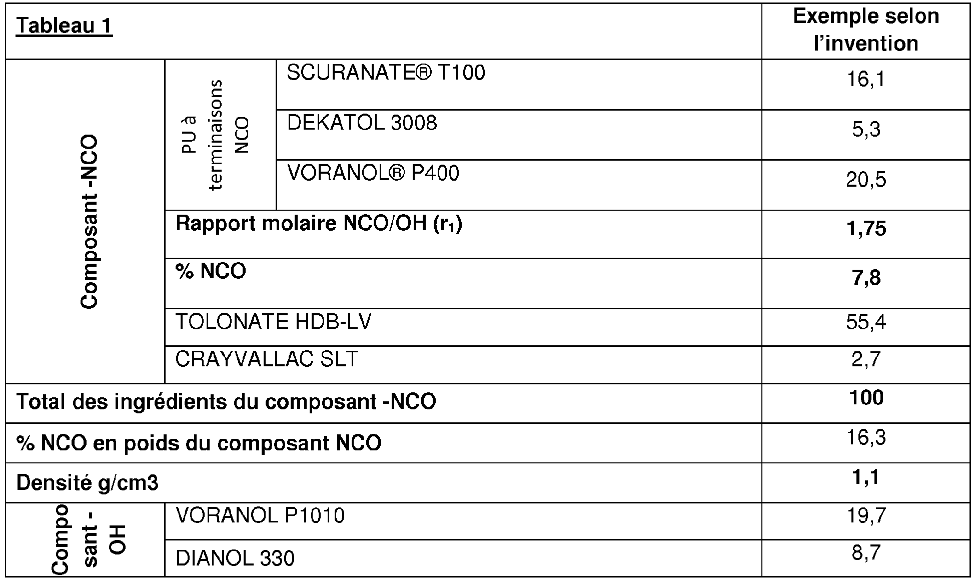

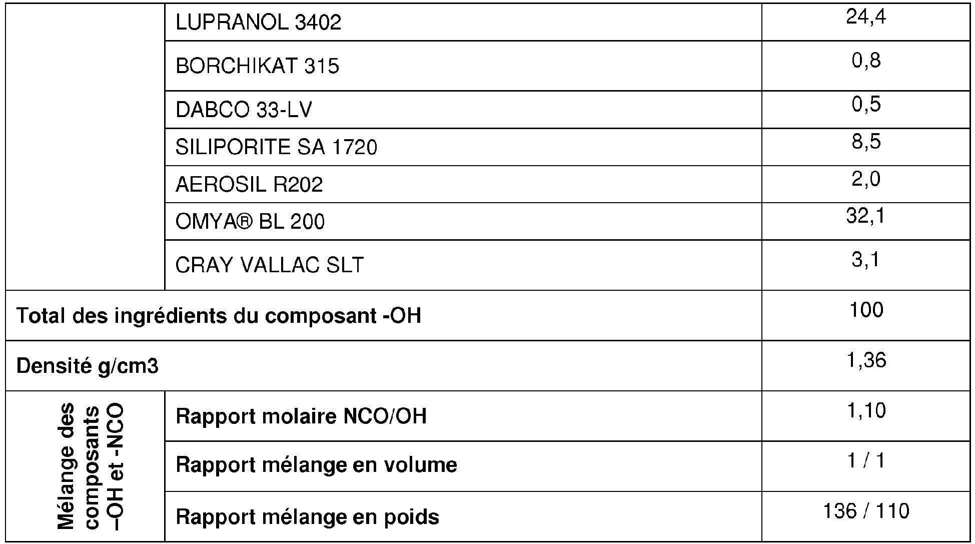

### Exemple 4 : Evaluation des performances

Test de fluage : La composition a été extrudée d'une cartouche bi-composante (comprenant le composant -OH d'une part, et le composant -NCO d'autre part) au travers d'un mélangeur statique afin de déposer verticalement un cordon d'une section de 1 cm et sur une longueur de 10 à 20 cm.

Il a été vérifié visuellement si le cordon flue ou pas (stabilité dimensionnelle du cordon).

Durée de vie en pot (« pot life ») : Cette durée est estimée à l'aide d'une spatule ou abaisse langue en bois à usage médical (150 mm x 19 mm x 1,5 mm, bouts arrondis) dans une coupelle selon le protocole suivant :
Les composants -OH et -NCO ont été préalablement stabilisés à 23°C. 10 g de mélange desdits composants -NCO et -OH est pesé, dans un ratio volumique 1/1.

La durée de vie en pot est le temps à partir duquel, on ne constate plus de transfert de colle sur la spatule en bois (plus de fils). Elle est évaluée en trempant périodiquement une spatule neuve dans au moins 1 mm du mélange et ceci à partir de 50% de la durée de vie en pot théorique.

Les tests de performances mécaniques intrinsèques ont été réalisés selon la norme ISO 37 (2012).

La mesure de l'élongation à la rupture (ou « élongation at break » en anglais) par essai de traction a été effectuée selon le protocole décrit ci-après.

Le principe de la mesure consiste à étirer dans une machine de traction, dont la mâchoire mobile se déplace à une vitesse constante égale à 10 mm/minute, une éprouvette standard constituée de la composition réticulée et à enregistrer, au moment où se produit la rupture de l'éprouvette, la contrainte de traction appliquée (en MPa) ainsi que l'allongement (élongation) de l'éprouvette (en %). L'éprouvette standard est en forme d'haltère, comme illustré dans la norme internationale ISO 37. La partie étroite de l'haltère utilisée a pour longueur 20 mm, pour largeur 4 mm et pour épaisseur 3 à 4 mm.

### Les tests d'adhésion ont été réalisés selon la norme ISO 4587(2003)

Les éprouvettes ont été conditionnées au moins 7 jours avant les tests dans une pièce climatisée à 23°C et 50% d'humidité relative. La conpositiona été stockée préalablement au collage, depuis au moins 24 h à 23 ± 1°C.

La composition a été conditionnée à 23°C et déposée à l'aide d'un pistolet pour bicartouche, sur l'extrémité d'une des éprouvettes sur une surface de 25,0 x 12,5 mm², épaisseur: 1.0 mm (réglage avec les cales d'épaisseur). Une autre éprouvette a été positionnée dans l'axe de la première, et l'assemblage a été fortement pressé. Chaque éprouvette a été maintenue à l'aide d'une pince, pendant les 7 jours de réticulation. Après 7 jours de réticulation à 23°C et 50%HR (humdité relative), l'essai de traction a été effectué à l'aide d'un dynamomètre à 10 mm/min. Cinq mesures ont été effectuées, et une moyenne a été calculée.

### Duretés shore A et D

Les duretés shore A et D ont été mesurées selon la norme ISO 7619.

La composition a été coulée dans une capsule en polyéthylène, d'au moins 5 mm de hauteur. La réticulation s'est opérée pendant 7 jours à 23°C et 50% HR. Sur le duromètre choisi (A ou D), la valeur de mesure a été relevée au bout de 15 secondes. 2 mesures ont été effectuées, et une moyenne a été calculée.

Les propriétés obtenues des compositions préparées sont résumées dans le tableau 2 suivant :

| **Tableau 2** | | | **Composition selon l'invention** |
|---|---|---|---|
| **Test de fluage** - **Cordon 1 cm** | | | Aucun fluage |
| **Durée de vie en pot (minutes)** | | | 2 |
| **Dureté shore A (23°C- 50%HR)** | | **Après 10 minutes** | 81 |
| | | **Après 20 minutes** | 87 |
| **Dureté shore D (23°C- 50%HR)** | | **Après 10 minutes** | 41 |
| | | **Après 20 minutes** | 45 |
| **Tests de Performances Mécaniques intrinsèques (23°C-50%HR)** | | **Module à la rupture (MPa)** | 16 |
| | | **Elongation à la rupture (%)** | 83 |
| **Tests d'adhésion (23°C- 50%HR)** | **Force à la rupture (MPa)** | **ABS** / **ABS** | 4,3 |
| | | **Bois Hêtre** / **Hêtre** | 10 |
| | | **Polycarbonate** / **Polycarbonate** | 7,7 |
| | | **Acier Galvanisé** / **acier Galvanisé** | 4 |

La composition selon l'invention conduit avantageusement, après mélange des composants OH et NCO, a une absence de fluage après application, notamment en position verticale.

En outre, la composition présente avantageusement à un joint adhésif ayant de bonnes propriétés mécaniques et adhésives.

La composition exemplifiée permet avantageusement une montée en cohésion très rapide (durée de vie en pot très faible) et à des duretés shore A et D élevées, permettant avantageusement de manipuler et/ou poncer et/ou découper les assemblages obtenus rapidement après l'application.

## Revendications

1. Composition comprenant :
- un composant -NCO comprenant :
A) au moins un polyuréthane comportant au moins deux groupements terminaux NCO obtenu par réaction de polyaddition :
- d'une composition comprenant au moins un diisocyanate, de préférence au moins un diisocyanate dissymétrique ; et
- d'une composition comprenant au moins un polyol,
B) au moins un polyisocyanate comprenant au moins trois fonctions isocyanate
- NCO, choisi dans le groupe constitué des biurets, des isocyanurates, des adduits de diisocyanates et de triols, et de leurs mélanges ;
- un composant -OH comprenant :
- au moins deux polyols P1 ayant chacun une masse moléculaire moyenne en nombre strictement inférieure à 500 g/mol, déterminée selon la méthode identifiée dans la description, lesdits polyols P1 étant tels que :
∘ au moins un polyol P1 comprendau moins trois fonctions hydroxyle, de préférence au moins quatre fonctions hydroxyle ; et
∘ au moins un polyol P1 comprend au moins deux fonctions hydroxyle ;
et
- au moins un polyol P2 ayant une masse moléculaire moyenne en nombre strictement supérieure à 1 000 g/mol, déterminée selon la méthode identifiée dans la description, ladite composition comprenant au moins un agent de rhéologie,
le ratio volumique composant -OH/composant -NCO allant de 1/3 à 3/1.

2. Composition selon la revendication 1, dans laquelle le composant -OH comprend au moins un agent de rhéologie, et le composant -NCO comprend au moins un agent de rhéologie pouvant être identique ou différent de celui du composant -OH.

3. Composition selon l'une quelconque des revendications 1 ou 2, dans laquelle l'agent de rhéologie est choisi parmi les agents thixotropiques, et plus préférentiellement parmi:
- les plastisols de PVC,
- la silice pyrogénée,
- des dérivés d'urée issus de la réaction d'un monomère diisocyanate aromatique tel que le 4,4'-MDI avec une amine aliphatique telle que la butylamine;
- les cires d'amide, de préférence les cires d'amides micronisées.

4. Composition selon l'une quelconque des revendications 1 à 3, dans laquelle :
- la teneur totale en agent(s) de rhéologie(s) dans le composant -OH varie de 0% à 10% en poids, de préférence de 0,1% à 10% en poids, plus préférentiellement de 1% à 5% en poids par rapport au poids total du composant -OH ; et/ou
- la teneur totale en agent(s) de rhéologie(s) dans le composant -NCO varie de 0% à 10% en poids, de préférence de 0,1% à 10% en poids, plus préférentiellement de 1% à 5% en poids par rapport au poids total du composant -NCO.

5. Composition selon l'une quelconque des revendications 1 à 4, dans laquelle le composant -OH comprend :
- au moins un polyol P1 comprenant au moins quatre fonctions hydroxyle ; et
- au moins un polyol P1 comprenant deux fonctions hydroxyle, de préférence comprenant au moins un radical arylène.

6. Composition selon l'une quelconque des revendications 1 à 5, dans laquelle les polyols P1 ont chacun une masse moléculaire moyenne en nombre allant de 100 g/mol à moins de 500 g/mol, déterminée selon la méthode identifiée dans la description, de préférence de 200 g/mol à moins de 500 g/mol, préférentiellement de 300 à moins de 500 g/mol, avantageusement de 400 à moins de 500 g/mol, et encore plus avantageusement de 400 à 490 g/mol.

7. Composition selon l'une quelconque des revendications 1 à 6, dans laquelle le polyol P2 a une masse moléculaire moyenne en nombre inférieure ou égale à 10 000 g/ mol, déterminée selon la méthode identifiée dans la description, préférentiellement inférieure ou égale à 5 000 g/mol, avantageusement inférieure ou égale à 3 000 g/mol.

8. Composition selon l'une quelconque des revendications 1 à 7, dans laquelle le(s) polyol(s) P2 est(sont) choisi(s) parmi les polyester polyols, les polyéther polyols, les polyène polyols, les polycarbonate polyols, les poly(éther-carbonate) polyols, et leurs mélanges, de préférence parmi les polyéther polyols, et en particulier parmi les polyéther diols.

9. Composition selon l'une quelconque des revendications 1 8 9, dans laquelle le composant -OH comprend au moins un catalyseur choisi dans le groupe constitué :
- des catalyseurs organo-métalliques, de préférence à l'exception des catalyseurs à base d'étain ;
- des amines tertiaires ; et
- de leurs mélanges.

10. Composition selon l'une quelconque des revendications 1 à 9, dans laquelle le composant -OH comprend au moins une charge, la quantité totale en charge(s) allant de préférence de 1% à 50% en poids, préférentiellement de 10% à 45% en poids, avantageusement de 20% à 40% en poids par rapport au poids total du composant - OH.

11. Composition selon l'une quelconque des revendications 1 à 10, dans laquelle le polyuréthane A) comportant au moins deux groupements terminaux NCO est obtenu par réaction de polyaddition :
- d'une composition comprenant au moins un diisocyanate, de préférence au moins un diisocyanate dissymétrique ; et
- d'une composition comprenant au moins un polyol,
le(s) monomère(s) diisocyanate(s) étant choisi(s) dans le groupe constitué :
- de l'isophorone diisocyanate (IPDI),
- du toluène diisocyanate (TDI), et en particulier du 2,4-toluène diisocyanate ;
- de la forme hydrogénée du TDI, et en particulier de la forme hydrogénée du 2,4-toluène diisocyanate et/ou la forme hydrogénée du 2,6-TDI : 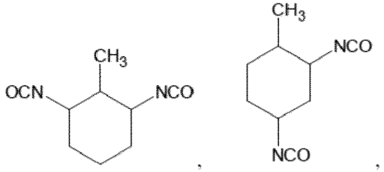
- du diisocyanate de diphénylméthane (MDI), et en particulier du 2,4'-diisocyanate de diphénylméthane (2,4'-MDI) et/ou du 4,4'-MDI ;
- de la forme hydrogénée du MDI, et en particulier de la forme hydrogénée du 2,4'-diisocyanate de diphénylméthane (2,4'-MDI) ; et
- de leurs mélanges ;
et ledit polyol étant de préférence choisi parmi les polyéther polyols, les polyester polyols, et leurs mélanges.

12. Composition selon l'une quelconque des revendications 1 à 11, dans les quantités en monomère(s) isocyanate(s) et en polyol(s) utilisés pour la synthèse du polyuréthane A) sont telles que le rapport molaire NCO/OH, noté r₁, va de 1,5 à 2, plus préférentiellement de 1,7 à 1,9.

13. Composition selon l'une quelconque des revendications 1 à 12, dans laquelle le composant -NCO comprend une teneur totale en polyisocyanate(s) comprenant au moins trois fonctions -NCO B) allant de 40% à 95% en poids, de préférence de 45% à 90% en poids, préférentiellement de 50% à 85% en poids, et avantageusement de 50% à 70% en poids par rapport au poids total du composant -NCO.

14. Composition selon l'une quelconque des revendications 1 à 13, dans laquelle le composant -NCO comprend B) un mélange de polyisocyanates, lesdits polyisocyanates comprenant chacun au moins trois fonctions NCO, la fonctionnalité moyenne NCO dudit mélange de polyisocyanates étant supérieure ou égale à 3, de préférence supérieure ou égale à 3,2, encore plus préférentiellement supérieure ou égale à 3,5.

15. Utilisation d'une composition telle que définie dans l'une quelconque des revendications 1 à 14, comme adhésif, mastic ou revêtement, de préférence comme adhésif, de préférence pour la réparation et/ou le collage dans le domaine de l'automobile, de la construction, ou de la marine.

## Patentansprüche

1. Zusammensetzung, umfassend:
- eine Komponente -NCO, umfassend:
A) mindestens ein Polyurethan, das mindestens zwei NCO-Endgruppen aufweist und erhalten wird durch Polyadditionsreaktion:
- einer Zusammensetzung, die mindestens ein Diisocyanat, bevorzugt mindestens ein unsymmetrisches Diisocyanat umfasst; und
- einer Zusammensetzung, die mindestens ein Polyol umfasst,
B) mindestens ein Polyisocyanat, das mindestens drei Isocyanat-Funktionen -NCO umfasst und aus der Gruppe gewählt ist, die aus den Biureten, den Isocyanuraten, den Addukten aus Diisocyanaten und Triolen und ihren Mischungen besteht;
- eine Komponente -OH, umfassend:
- mindestens zwei Polyole P1 mit jeweils einer zahlenmittleren Molekularmasse kleiner als 500 g/mol, bestimmt nach der in der Beschreibung genannten Methode, wobei die Polyole P1 derart sind, dass:
∘ mindestens ein Polyol P1 mindestens drei Hydroxylfunktionen, bevorzugt mindestens vier Hydroxylfunktionen umfasst; und
∘ mindestens ein Polyol P1 mindestens zwei Hydroxylfunktionen umfasst;
und
- mindestens ein Polyol P2 mit einer zahlenmittleren Molekularmasse größer als 1.000 g/mol, bestimmt nach der in der Beschreibung genannten Methode,
wobei die Zusammensetzung mindestens ein Rheologiemittel umfasst,
wobei das Volumenverhältnis Komponente -OH/Komponente - NCO 1/3 bis 3/1 beträgt.

2. Zusammensetzung nach Anspruch 1, in der die Komponente -OH mindestens ein Rheologiemittel umfasst und die Komponente -NCO mindestens ein Rheologiemittel umfasst, das identisch mit oder verschieden von dem der Komponente -OH sein kann.

3. Zusammensetzung nach einem der Ansprüche 1 oder 2, in der das Rheologiemittel unter den thixotropen Mitteln gewählt ist und vorzugsweise unter:
- den PVC-Plastisolen,
- dem pyrogenen Siliciumdioxid,
- den Urea-Derivaten, die aus der Reaktion eines aromatischen Diisocyanat-Monomers wie 4,4'-MDI mit einem aliphatischen Amin wie Butylamin hervorgegangen sind;
- den Amidwachsen, bevorzugt den mikronisierten Amidwachsen.

4. Zusammensetzung nach einem der Ansprüche 1 bis 3, in der:
- der Gesamtgehalt an Rheologiemittel(n) in der Komponente -OH von 0 bis 10 Gew.-%, bevorzugt von 0,1 bis 10 Gew.-%, stärker bevorzugt von 1 bis 5 Gew.-% bezogen auf das Gesamtgewicht der Komponente -OH variiert; und/oder
- der Gesamtgehalt an Rheologiemittel(n) in der Komponente -NCO von 0 bis 10 Gew.-%, bevorzugt von 0,1 bis 10 Gew.-%, stärker bevorzugt von 1 bis 5 Gew.-% bezogen auf das Gesamtgewicht der Komponente -NCO variiert.

5. Zusammensetzung nach einem der Ansprüche 1 bis 4, in der die Komponente -OH umfasst:
∘ mindestens ein Polyol P1, das mindestens vier Hydroxylfunktionen umfasst; und
- mindestens ein Polyol P1, das zwei Hydroxylfunktionen umfasst und bevorzugt mindestens einen Arylenrest umfasst.

6. Zusammensetzung nach einem der Ansprüche 1 bis 5, in der die Polyole P1 jeweils eine zahlenmittlere Molekularmasse von 100 g/mol bis weniger als 500 g/mol, bestimmt nach der in der Beschreibung genannten Methode, bevorzugt von 200 g/mol bis weniger als 500 g/mol, vorzugsweise von 300 bis weniger als 500 g/mol, vorteilhafterweise von 400 bis weniger als 500 g/mol und in weiter vorteilhafter Weise von 400 bis 490 g/mol aufweisen.

7. Zusammensetzung nach einem der Ansprüche 1 bis 6, in der das Polyol P2 eine zahlenmittlere Molekularmasse kleiner als oder gleich 10.000 g/mol, bestimmt nach der in der Beschreibung genannten Methode, vorzugsweise kleiner als oder gleich 5.000 g/mol, vorteilhafterweise kleiner als oder gleich 3.000 g/mol aufweist.

8. Zusammensetzung nach einem der Ansprüche 1 bis 7, in der das(die) Polyol(e) P2 unter den Polyesterpolyolen, den Polyetherpolyolen, den Polyenpolyolen, den Polycarbonatpolyolen, den Poly(ether-carbonat)polyolen und ihren Mischungen, bevorzugt unter den Polyetherpolyolen und insbesondere unter den Polyetherdiolen gewählt ist(sind).

9. Zusammensetzung nach einem der Ansprüche 1 8 9, in der die Komponente -OH mindestens einen Katalysator umfasst, der aus der Gruppe gewählt ist, die besteht aus:
- den organometallischen Katalysatoren, bevorzugt mit Ausnahme der Katalysatoren auf Zinnbasis;
- den tertiären Aminen; und
- ihren Mischungen.

10. Zusammensetzung nach einem der Ansprüche 1 bis 9, in der die Komponente -OH mindestens einen Füllstoff umfasst, wobei die Gesamtmenge an Füllstoff(en) bevorzugt 1 bis 50 Gew.-%, vorzugweise 10 bis 45 Gew.-%, vorteilhafterweise 20 bis 40 Gew.-% bezogen auf das Gesamtgewicht der Komponente -OH beträgt.

11. Zusammensetzung nach einem der Ansprüche 1 bis 10, in der das Polyurethan A), das mindestens zwei NCO-Endgruppen aufweist, durch Polyadditionsreaktion erhalten wird:
- einer Zusammensetzung, die mindestens ein Diisocyanat, bevorzugt mindestens ein unsymmetrisches Diisocyanat umfasst; und
- einer Zusammensetzung, die mindestens ein Polyol umfasst,
wobei das(die) Diisocyanatmonomer(e) aus der Gruppe gewählt ist(sind), die besteht aus:
- Isophoron-Diisocyanat (IPDI),
- Toluol-Diisocyanat (TDI) und insbesondere 2,4-Toluol-Diisocyanat;
- der hydrierten Form des TDI und insbesondere der hydrierten Form des 2,4-Toluol-Diisocyanats und/oder der hydrierten Form des 2,6-TDI: 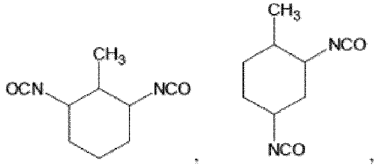
- Diphenylmethan-Diisocyanat (MDI) und insbesondere 2,4'-Diphenylmethan-Diisocyanat (2,4'-MDI) und/oder 4,4'-MDI;
- der hydrierten Form des MDI und insbesondere der hydrierten Form des 2,4'-Diphenylmethan-Diisocyanat (2,4'-MDI); und
- ihren Mischungen;
und wobei das Polyol bevorzugt unter den Polyetherpolyolen, den Polyesterpolyolen und ihren Mischungen gewählt ist.

12. Zusammensetzung nach einem der Ansprüche 1 bis 11, in die Mengen an Isocyanatmonomer(en) und an Polyol(en), die zur Synthese des Polyurethans A) verwendet werden, derart sind, dass das Molverhältnis NCO/OH, das als r₁ notiert wird, 1,5 bis 2, bevorzugter 1,7 bis 1,9 beträgt.

13. Zusammensetzung nach einem der Ansprüche 1 bis 12, in der die Komponente -NCO einen Gesamtgehalt an Polyisocyanat(en), die mindestens drei Funktionen -NCO B) umfassen, von 40 bis 95 Gew.-%, bevorzugt von 45 bis 90 Gew.-%, vorzugweise von 50 bis 85 Gew.-% und vorteilhafterweise von 50 bis 70 Gew.-% bezogen auf das Gesamtgewicht der Komponente -NCO umfasst.

14. Zusammensetzung nach einem der Ansprüche 1 bis 13, in der die Komponente -NCO B) eine Mischung aus Polyisocyanaten umfasst, wobei die Polyisocyanate jeweils mindestens drei NCO-Funktionen umfassen, wobei die mittlere NCO-Funktionalität der Mischung aus Polyisocyanaten größer als oder gleich 3, bevorzugt größer als oder gleich 3,2, noch stärker bevorzugt größer als oder gleich 3,5 ist.

15. Verwendung einer Zusammensetzung wie in einem der Ansprüche 1 bis 14 definiert als Klebstoff, Dichtstoff oder Beschichtungsstoff, bevorzugt als Klebstoff, bevorzugt zur Reparatur und/oder zum Kleben im Bereich Automobil, Bauwesen oder Schifffahrtswesen.

## Claims

1. Composition comprising:
- an -NCO component comprising:
A) at least one polyurethane including at least two NCO end groups obtained by a polyaddition reaction:
- of a composition comprising at least one diisocyanate, preferably at least one dissymmetric diisocyanate; and
- of a composition comprising at least one polyol;
B) at least one polyisocyanate comprising at least three isocyanate -NCO functions chosen from the group consisting of biurets, isocyanurates, adducts of diisocyanates and of triols, and mixtures thereof;
- an -OH component comprising:
- at least two polyols P1 each having a number-average molecular mass strictly less than 500 g/mol, determined according to the method identified in the description, said polyols P1 being such that:
∘ at least one polyol P1 comprises at least three hydroxyl functions, preferably at least four hydroxyl functions; and
∘ at least one polyol P1 comprises at least two hydroxyl functions;
and
- at least one polyol P2 having a number-average molecular mass strictly greater than 1000 g/mol, determined according to the method identified in the description,
said composition comprising at least one rheological agent,
the volume ratio of -OH component/-NCO component ranging from 1/3 to 3/1.

2. Composition according to Claim 1, in which the -OH component comprises at least one rheological agent, and the -NCO component comprises at least one rheological agent which may be identical to or different from that of the -OH component.

3. Composition according to either one of Claims 1 and 2, in which the rheological agent is chosen from thixotropic agents, and more preferentially from:
- PVC plastisols,
- fumed silica,
- urea derivatives derived from the reaction of an aromatic diisocyanate monomer such as 4,4'-MDI with an aliphatic amine such as butylamine,
- amide waxes, preferably micronized amide waxes.

4. Composition according to any one of Claims 1 to 3, in which:
- the total content of rheological agent(s) in the -OH component ranges from 0% to 10% by weight, preferably from 0.1% to 10% by weight, more preferentially from 1% to 5% by weight, relative to the total weight of the -OH component; and/or
- the total content of rheological agent(s) in the -NCO component ranges from 0% to 10% by weight, preferably from 0.1% to 10% by weight, more preferentially from 1% to 5% by weight, relative to the total weight of the - NCO component.

5. Composition according to any one of Claims 1 to 4, in which the -OH component comprises:
- at least one polyol P1 comprising at least four hydroxyl functions; and
- at least one polyol P1 comprising two hydroxyl functions, preferably comprising at least one arylene radical.

6. Composition according to any one of Claims 1 to 5, in which the polyols P1 each have a number-average molecular mass ranging from 100 g/mol to less than 500 g/mol, determined according to the method identified in the description, preferably from 200 g/mol to less than 500 g/mol, preferentially from 300 to less than 500 g/mol, advantageously from 400 to less than 500 g/mol and even more advantageously from 400 to 490 g/mol.

7. Composition according to any one of Claims 1 to 6, in which the polyol P2 has a number-average molecular mass of less than or equal to 10 000 g/mol, determined according to the method identified in the description, preferentially less than or equal to 5000 g/mol, advantageously less than or equal to 3000 g/mol.

8. Composition according to any one of Claims 1 to 7, in which the polyol(s) P2 are chosen from polyester polyols, polyether polyols, polyene polyols, polycarbonate polyols, poly(ether-carbonate) polyols, and mixtures thereof, preferably from polyether polyols, and in particular from polyether diols.

9. Composition according to any one of Claims 1 8 9, in which the -OH component comprises at least one catalyst chosen from the group consisting of:
- organometallic catalysts, preferably with the exception of tin-based catalysts;
- tertiary amines; and
- mixtures thereof.

10. Composition according to any one of Claims 1 to 9, in which the -OH component comprises at least one filler, the total amount of filler(s) preferably ranging from 1% to 50% by weight, preferentially from 10% to 45% by weight, advantageously from 20% to 40% by weight, relative to the total weight of the -OH component.

11. Composition according to any one of Claims 1 to 10, in which the polyurethane A) including at least two NCO end groups is obtained by polyaddition reaction:
- of a composition comprising at least one diisocyanate, preferably at least one dissymmetric diisocyanate; and
- of a composition comprising at least one polyol;
the diisocyanate monomer(s) being chosen from the group consisting of:
- isophorone diisocyanate (IPDI),
- toluene diisocyanate (TDI), and in particular 2,4-toluene diisocyanate;
- the hydrogenated form of TDI, and in particular the hydrogenated form of 2,4-toluene diisocyanate and/or the hydrogenated form of 2,6-TDI: 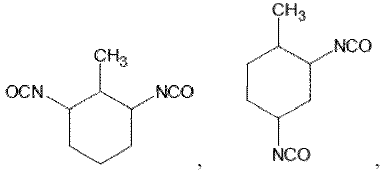
- diphenylmethane diisocyanate (MDI), and in particular 2,4'-diphenylmethane diisocyanate (2,4'-MDI) and/or 4,4'-MDI;
- the hydrogenated form of MDI, and in particular the hydrogenated form of 2,4'-diphenylmethane diisocyanate (2,4'-MDI); and
- mixtures thereof;
and said polyol preferably being chosen from polyether polyols, polyester polyols, and mixtures thereof.

12. Composition according to any one of Claims 1 to 11, in the amounts of isocyanate monomer(s) and of polyol(s) used in the synthesis of the polyurethane A) are such that the NCO/OH mole ratio, denoted r₁, ranges from 1.5 to 2, more preferentially from 1.7 to 1.9.

13. Composition according to any one of Claims 1 to 12, in which the -NCO component comprises a total content of polyisocyanate(s) comprising at least three -NCO functions B) ranging from 40% to 95% by weight, preferably from 45% to 90% by weight, preferentially from 50% to 85% by weight and advantageously from 50% to 70% by weight relative to the total weight of the -NCO component.

14. Composition according to any one of Claims 1 to 13, in which the -NCO component comprises B) a mixture of polyisocyanates, said polyisocyanates each comprising at least three NCO functions, the mean NCO functionality of said mixture of polyisocyanates being greater than or equal to 3, preferably greater than or equal to 3.2, even more preferentially greater than or equal to 3.5.

15. Use of a composition as defined in any one of Claims 1 to 14, as adhesive, mastic or coating, preferably as adhesive, preferably for repairing and/or adhesive bonding in the motor vehicle, construction or marine sector.
